# EUROPEAN PATENT APPLICATION

(11) **EP 3 287 238 A1**
(43) Date of publication of application: **28.02.2018**
(21) Application number: 17187122.1
(22) Date of filing: 21.08.2017
(51) Int. Cl.: B25C 1/04

(54) **TRIGGER ASSEMBLY FOR A PNEUMATIC TOOL**

(30) Priority: 22.08.2016 TW 105126708
(71) Applicant: Basso Industry Corp., Taichung 407 (TW)
(72) Inventor: Lai, Chun-Chi, 407 Taichung (TW); Liu, Chien-An, 407 Taichung (TW); Chen, Chun-Chiang, 407 Taichung (TW)
(74) Representative: Patentanwälte Bressel und Partner mbB

(57) **Abstract**

A trigger assembly for a pneumatic tool (2) includes a trigger unit (3), a lever member (4) and a switch unit (5). The pneumatic tool (2) includes a casing (21), a valve rod (22) movably mounted to the casing (21), and a safety member (23) movably mounted to the casing (21) . The trigger unit (3) includes a trigger (31) pivotable between a released position and a depressed position. The lever member (4) is pivoted to the safety member (23). The switch unit (5) includes a latch member (51) pivotable relative to the trigger (31), and a switch member (55) rotatable between a sequential firing position where the switch member (55) is separated from the path of movement of the latch member (23), and a repetitive firing position where the switch member (55) is disposed on the path of movement of the latch member (51).

## Description

The disclosure relates to a trigger assembly, and more particularly to a trigger assembly for a pneumatic tool.

Referring to Figure 1, a conventional pneumatic tool disclosed in Taiwanese Patent No. I370046 includes a main body 11, a valve member 12 that is movably mounted to the main body 11 and that controls airflow in the main body 11 for firing a nail, a safety member 13 that is movably mounted to the main body 11, a trigger member 14 that is pivoted to the main body 11, a lever member 15 that is pivoted to the safety member 13 and that is located between the valve member 12 and the trigger member 14, and a latch member 16 that is co-movably mounted to the trigger member 14 and that is moved onto the path of movement of the safety member 13 upon depression of the trigger member 14.

When a front end of the safety member 13 is pushed against an object, the lever member 15 is rotated by the trigger member 14, upon the depression of the trigger member 14, to depress the valve member 12 so as to fire the nail. When the trigger member 14 is continuously depressed after the firing of the nail, the latch member 16 remains located on the path of movement of the safety member 13 to limit the movement of the safety member 13. As such, the valve member 12 cannot move back to its original position, and the conventional pneumatic tool is prevented from firing another nail without release of the trigger member 14.

By virtue of the latch member 16, the conventional pneumatic tool is permitted to fire a nail only by sequentially pushing the safety member 13 against an object and depressing the trigger member 14 (i.e., a sequential firing mode), and is only permitted to fire another nail after the release of trigger member 14.

However, the conventional pneumatic tool cannot be operated in a repetitive firing mode, in which the trigger member 14 is continuously depressed and the safety member 13 is repeatedly pushed against an object/objects to repeatedly fire nails.

Therefore, an object of the disclosure is to provide a trigger assembly that can alleviate the drawback of the prior art.

According to one aspect of the disclosure, the trigger assembly is for use in a pneumatic tool. The pneumatic tool includes a casing, a valve rod that is movably mounted to the casing and that is operable to control airflow in the pneumatic tool for firing a nail, and a safety member that is movably mounted to the casing. The safety member is movable relative to the casing between a first position where the safety member is proximate to a valve seat to which the valve rod is mounted, and a second position where the safety member is distal from the valve seat. The trigger assembly includes a trigger unit, a lever member and a switch unit. The trigger unit includes a trigger that is pivoted to the casing. The trigger is pivotable relative to the casing between a released position and a depressed position. The lever member is pivoted to the safety member and is partially located between the valve rod and the trigger for depressing the valve rod. The switch unit includes a latch member that is pivoted to the casing and that is pivotable relative to the trigger, and a switch member that is rotatably mounted to the casing and that is rotatable between a sequential firing position where the switch member is separated from the path of movement of the latch member, and a repetitive firing position where the switch member is disposed on the path of movement of the latch member. When the trigger is depressed without pushing the safety member against an object, the lever member is driven by the trigger to move the safety member from the first position to the second position so as to prevent firing of the nail. When the switch member is at the sequential firing position and when the trigger is depressed after the safety member is pushed against an object to be maintained at the first position, the lever member is driven by the trigger to depress the valve rod so as to fire the nail, and the latch member is permitted to move onto the path of movement of the safety member upon the depression of the trigger, such that when the safety member pushes the latch member and moves past the latch member to the second position after the firing of the nail, the latch member hinders the movement of the safety member toward the first position so as to prevent firing of another nail. When the switch member is at the repetitive firing position and when the trigger is continuously depressed, the latch member is prevented from moving onto the path of movement of the safety member, and the safety member can be repeatedly pushed against the object to move from the second position to the first position so as to repeatedly fire nails.

According to another aspect of the disclosure, the trigger assembly is for use in a pneumatic tool. The pneumatic tool includes a casing, a valve rod that is movably mounted to the casing and that is operable to control airflow in the pneumatic tool for firing a nail, and a safety member that is movably mounted to the casing. The safety member is movable relative to the casing between a first position where the safety member is proximate to a valve seat to which the valve rod is mounted, and a second position where the safety member is distal from the valve seat. The trigger assembly includes a trigger unit, a lever member and a switch unit. The trigger unit includes a trigger that is pivoted to the casing. The trigger is pivotable relative to the casing between a released position and a depressed position. The lever member is pivoted to the safety member and is partially locatedbetween the valve rod and the trigger for depressing the valve rod. The switch unit includes a latch member that is pivoted to the casing and that is pivotable relative to the trigger, and a switch member that is rotatably mounted to the casing and that is rotatable between a sequential firing position where the switch member is separated from the path of movement of the latch member to permit the latch member to be moved onto the path of movement of the safety member upon depression of the trigger, and a repetitive firing position where the switch member is disposed on the path of movement of the latch member so as to prevent the latch member from being moved onto the path of movement of the safety member.

Other features and advantages of the disclosure will become apparent in the following detailed description of the embodiment with reference to the accompanying drawings, of which:

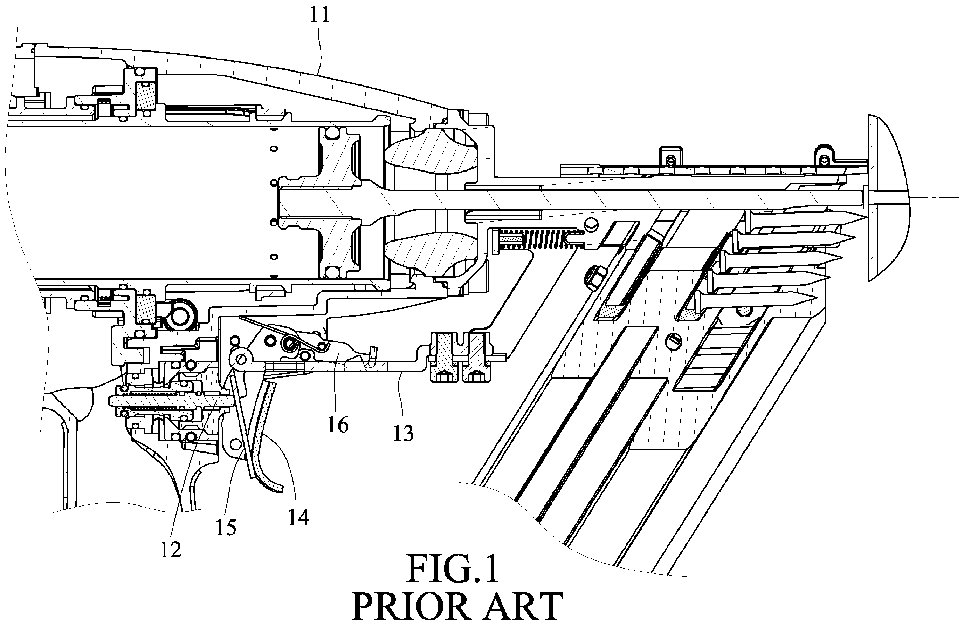

Figure 1 is a fragmentary sectional view illustrating a conventional pneumatic tool in Taiwanese Patent No. I370046;
Figure 2 is a perspective view illustrating a pneumatic tool with an embodiment of the trigger assembly according to the disclosure;
Figure 3 is an exploded perspective view illustrating the embodiment;
Figure 4 is a perspective view illustrating the embodiment;
Figure 5 is a schematic fragmentary sectional view illustrating a switch member at a sequential firing position;
Figure 6 is another schematic fragmentary sectional view illustrating the switch member at the sequential firing position and a trigger being depressed without pushing a safety member against an object;
Figure 7 is still another schematic fragmentary sectional view illustrating the switch member at the sequential firing position and the safety member being pushed against an object;
Figure 8 is still another schematic fragmentary sectional view illustrating the switch member at the sequential firing position and the trigger being depressed after the safety member is pushed against an object;
Figure 9 is still another schematic fragmentary sectional view illustrating the switch member at the sequential firing position and the trigger being continuously depressed after firing of a nail;
Figure 10 is still another schematic fragmentary sectional view illustrating the switch member at a repetitive firing position;
Figure 11 is still another schematic fragmentary sectional view illustrating the switch member at the repetitive firing position and the trigger being depressed without pushing the safety member against an object; and
Figure 12 is yet another schematic fragmentary sectional view illustrating the switch member at the repetitive firing position, the trigger being depressed, and the safety member being pushed against an object.

Before the disclosure is described in greater detail, it should be noted that where considered appropriate, reference numerals or terminal portions of reference numerals have been repeated among the figures to indicate corresponding or analogous elements, which may optionally have similar characteristics.

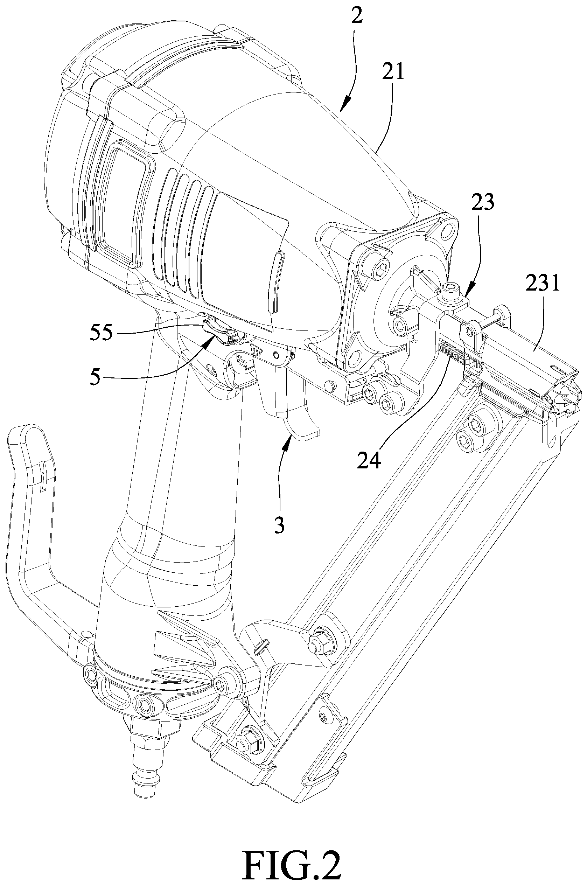

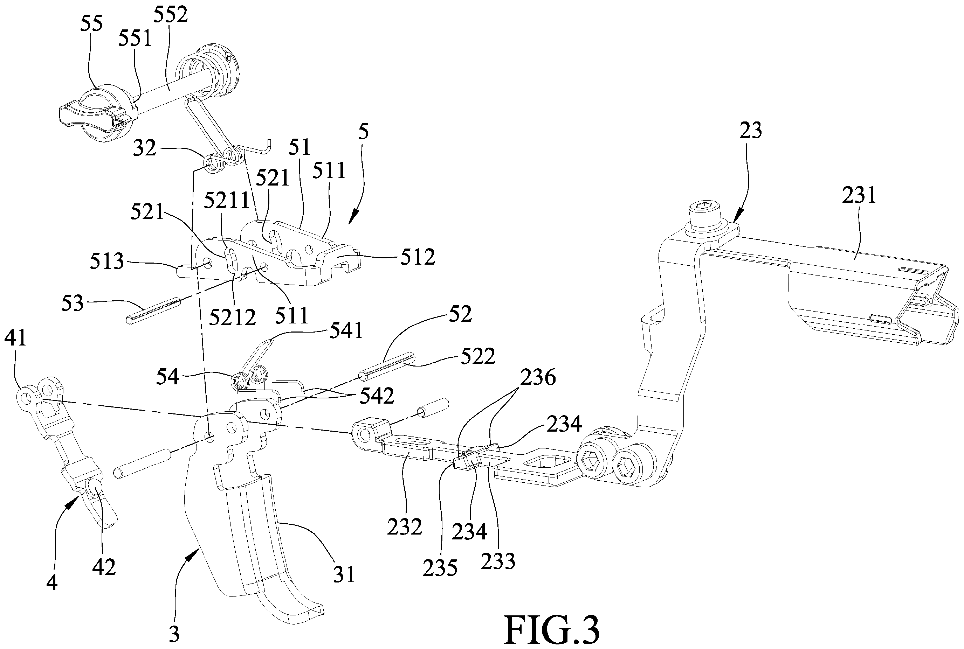

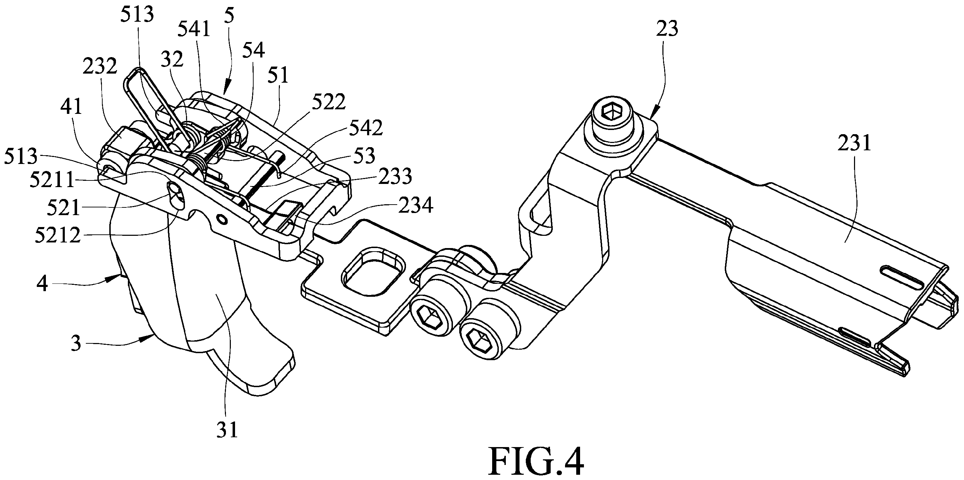

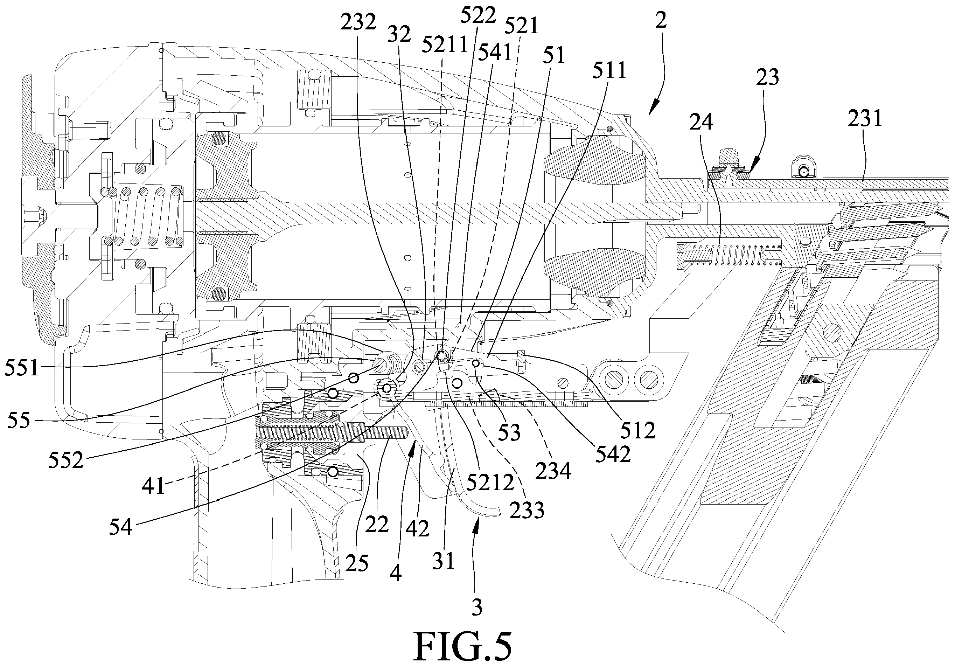

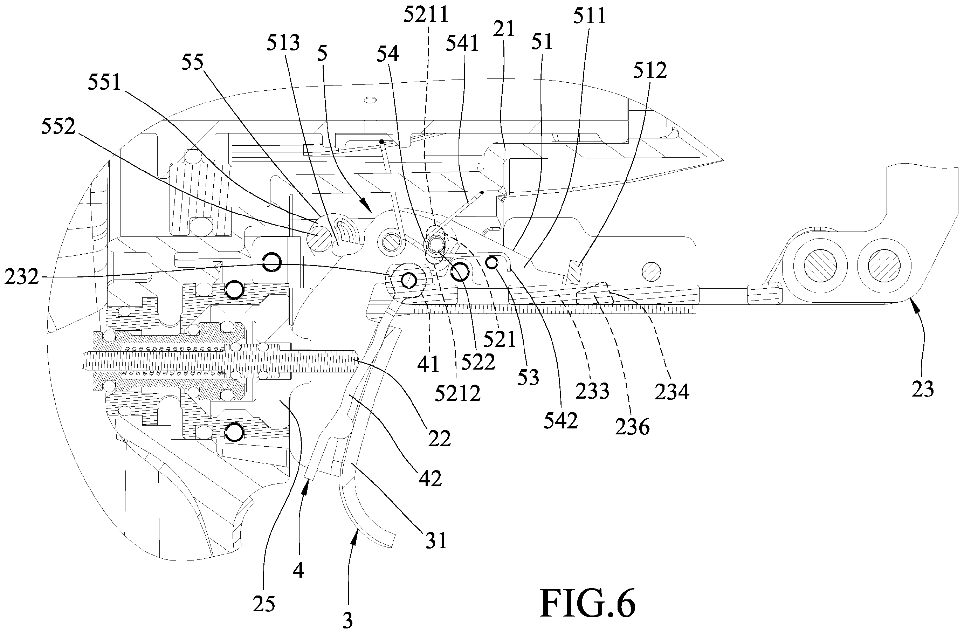

Referring to Figures 2 to 5, the embodiment of the trigger assembly according to the disclosure is used in a pneumatic tool 2. The pneumatic tool 2 includes a casing 21, a valve rod 22 (see Figure 5) that is movably mounted to the casing 21 and that is operable to control airflow in the pneumatic tool 2 for firing a nail/nails, a safety member 23 that is movably mounted to the casing 21, and a safety resilient member 24. The safety member 23 has an urging endportion 231, a connecting endportion 232 that is opposite to the urging end portion 231, an engaging portion 233 that is located between the urging end portion 231 and the connecting end portion 232, and two limiting blocks 236 that are respectively located at two opposite lateral sides of the engaging portion 233. Each of the limiting blocks 236 has an inclined guide surface 234 that faces away from the connecting end portion 232, and a limiting surface 235 that faces toward the connecting end portion 232. The safety member 23 is movable relative to the casing 21 between a first position (see Figures 5, 7, 8, 10 and 12) and a second position (see Figures 6, 9 and 11). At the time that the safety member 23 is at the second position, the urging end portion 231 extends beyond a front edge of the casing 21 by an extent greater than the extent by which the urging end portion 231 extends beyond the front edge at the time that the safety member 23 is at the first position. The connecting end portion 232 of the safety member 23 is proximate to a valve seat 25 (see Figure 5) to which the valve rod 22 is mounted when the safety member 23 is at the first position, and is distal from the valve seat 25 when the safety member 23 is at the second position. The safety resilient member 24 has two opposite ends respectively abutting against the casing 21 and the safety member 23 to resilientlybias the safety member 23 toward the first position.

The embodiment of the trigger assembly according to this disclosure includes a trigger unit 3, a lever member 4 and a switch unit 5.

The trigger unit 3 includes a trigger 31 that is pivoted to the casing 21, and a trigger resilient member 32. The trigger 31 is pivotable relative to the casing 21 between a released position (see Figures 5, 7 and 10) and a depressed position (see Figures 6, 8, 9, 11 and 12). The trigger resilient member 32 resiliently biases the trigger 31 toward the released position.

The lever member 4 has a pivot portion 41 that is pivoted to the connecting end portion 232 of the safety member 23, and an actuating portion 42 that is located between the valve rod 22 and the trigger 31

The switch unit 5 includes a latch member 51, a limiting module 52, a bolt member 53, a latch resilient member 54 and a switch member 55.

The latch member 51 is pivoted to the casing 21, and is pivotable relative to the trigger 31. In one embodiment, the latch member 51 and the trigger 31 are pivoted to the casing 21 by the same pivot pin. The latch member 51 has two spaced-apart side walls 511 that are respectively located at two opposite lateral sides of the trigger 31, a stop wall 512 that is connected between distal ends of the side walls 511 distal from the trigger 31 (distal from the valve seat 25), and two projections 513 that are respectively formed at the side walls 511 and that are opposite to the stop wall 512.

The limiting module 52 is configured to limit the range of the relative pivotal movement between the latch member 51 and the trigger 31. In this embodiment, the limiting module 52 includes two limiting grooves 521 that are respectively formed in the side walls 511 of the latch member 51 and that are aligned with each other, and a limiting pin 522 that is mounted to the trigger 31 and that has two opposite end portions respectively slidable along the limiting grooves 521. Each of the limiting grooves 521 has opposite first and second ends 5211, 5212.

The bolt member 53 is mounted to the side walls 511 of the latch member 51 and is parallel to the limiting pin 522.

The latch resilient member 54 is mounted to the limiting pin 522, and has a first abutment section 541 that abuts against the casing 21, and two second abutment sections 542 that abut against the bolt member 53. The latch resilient member 54 resiliently biases the stop wall 512 of the latch member 51 toward the safety member 23.

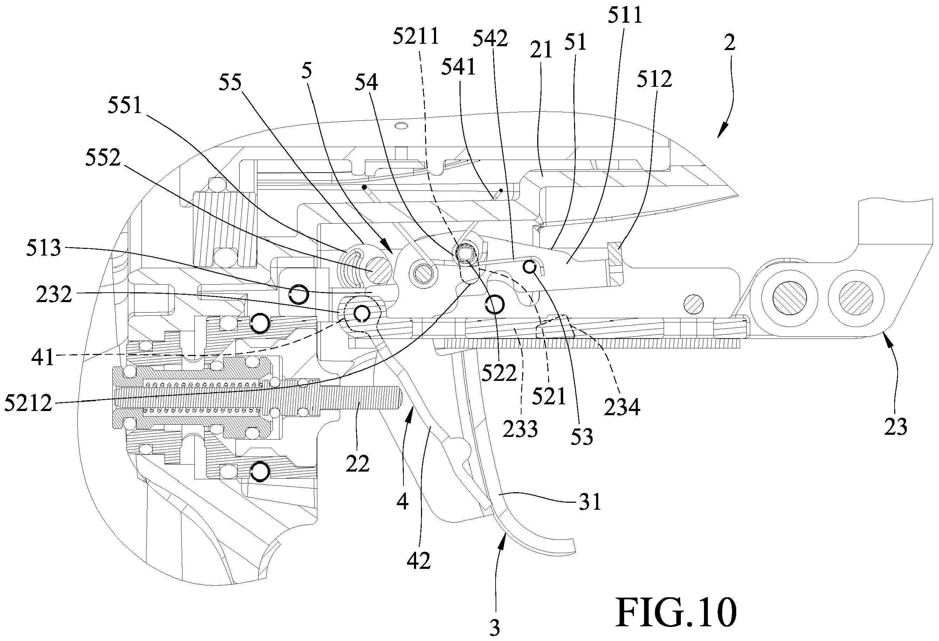

The switch member 55 has a main body 551 that is rotatably mounted to the casing 21 and that is partially disposed out of the casing 21 for manual operation, and a control portion 552 that is eccentric to the main body 551. By rotating the main body 511, the switch member 55 is movable between a sequential firing position (see Figures 5 to 9) where the control portion 552 is separated from the path of movement of the projections 513 of the latch member 51, and a repetitive firing position (see Figures 10 to 12) where the control portion 552 is disposed on the path of movement of the projections 513 of the latch member 51 to prevent the latch member 51 from being moved onto the path of movement of the safety member 23.

Referring to Figures 5 and 10, when the pneumatic tool 2 is not operated, the trigger 31 is at the released position, and the safety member 23 is at the first position. At this time, the latch member 51 is limited by the limiting module 52 (the end portions of the limiting pin 522 are respectively at the first ends 5211 of the limiting grooves 521), and is separated from the path of movement of the safety member 23.

Referring to Figures 5 and 6, when the switch member 55 is at the sequential firing position and when the trigger 31 is depressed without pushing the urging end portion 231 of the safety member 23 against an object, the actuating portion 42 of the lever member 4 is moved toward the valve seat 25 by the trigger 31, and the lever member 4 is hindered by the valve rod 22, so the pivot portion 41 of the lever member 4 is moved away from the valve seat 25 to move the safety member 23 from the first position to the second position against the biasing action of the safety resilient member 24, and the resultant movement of the valve rod 22 is insufficient for firing a nail.

At the same time, the limiting pin 522 is moved toward the safety member 23 upon depression of the trigger 31, so the latch member 51 is permitted to be biased by the latch resilient member 54 to move onto the path of movement of the safety member 23 to engage the stop wall 512 with the engaging portion 233 of the safety member 23. As a result, the stop wall 512 hinders the movement of the limiting blocks 236 toward the valve seat 25, and the safety member 23 is prevented from moving to the first position for firing the nail unless the trigger 31 is released.

It should be noted that the movement of the latch member 51 upon depression of the trigger 31 stops after the stop wall 512 is engaged with the engaging portion 233 of the safety member 23, and the trigger 31 can be further depressed to respectively move the end portions of the limiting pin 522 away from the first ends 5211 of the limiting grooves 521.

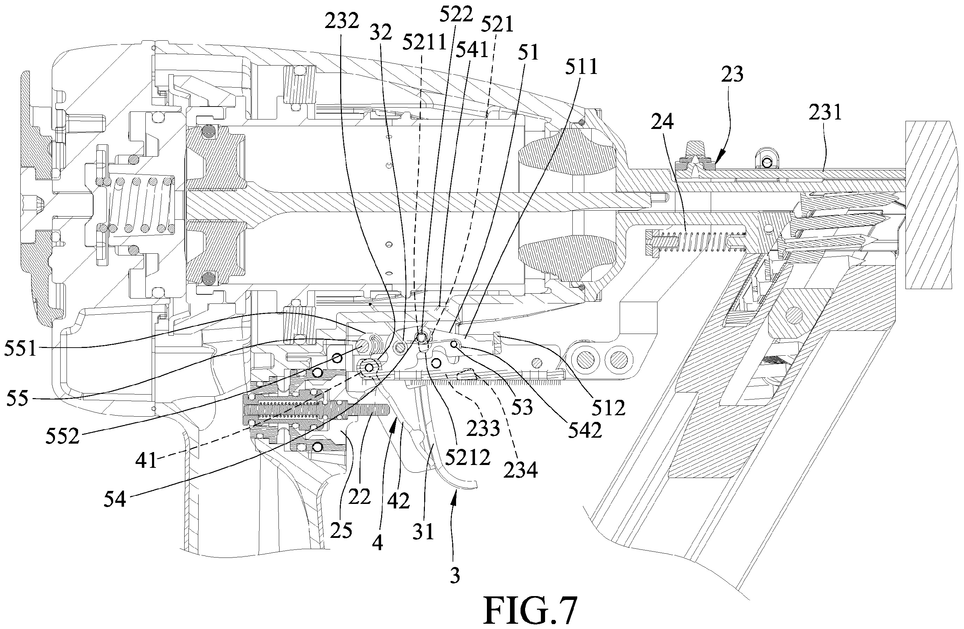

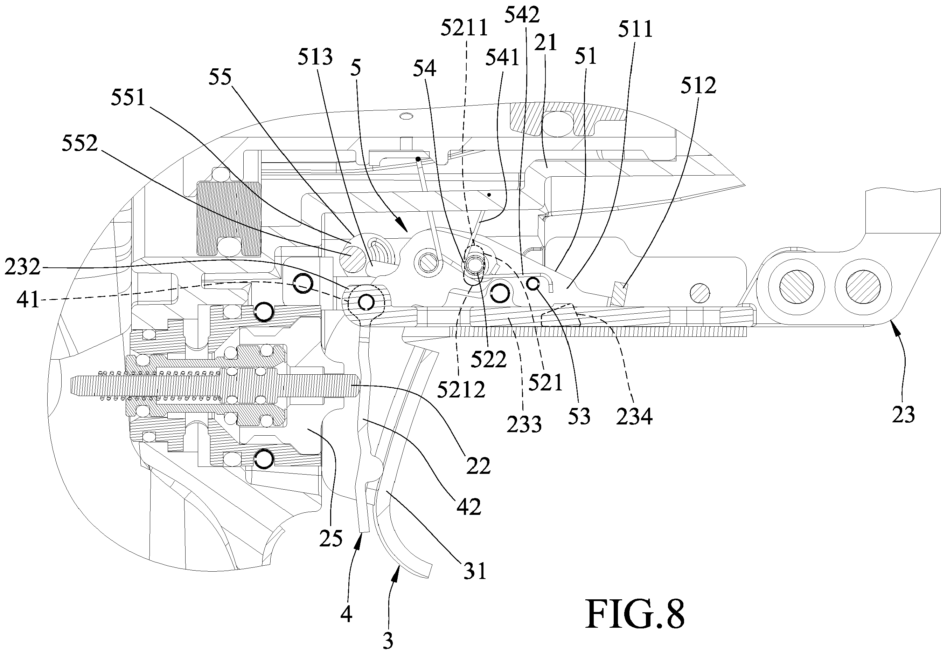

Referring to Figures 7 and 8, when the switch member 55 is at the sequential firing position and when the trigger 31 is depressed after the urging end portion 231 of the safety member 23 is pushed against an object to maintain the safety member 23 at the first position, the actuating portion 42 of the lever member 4 is moved toward the valve seat 25 by the trigger 31, and the pivot portion 41 of the lever member 4 is prevented from moving away from the valve seat 25 by the object. As a result, the valve rod 22 is depressed by the actuating portion 42 of the lever member 4 to move by a distance that is sufficient for firing a nail.

At the same time, the limiting pin 522 is moved toward the safety member 23 upon depression of the trigger 31, so the latch member 51 is permitted to be biased by the latch resilient member 54 to move onto the path of movement of the safety member 23 to engage the stop wall 512 with the engaging portion 233 of the safety member 23 (see Figure 8).

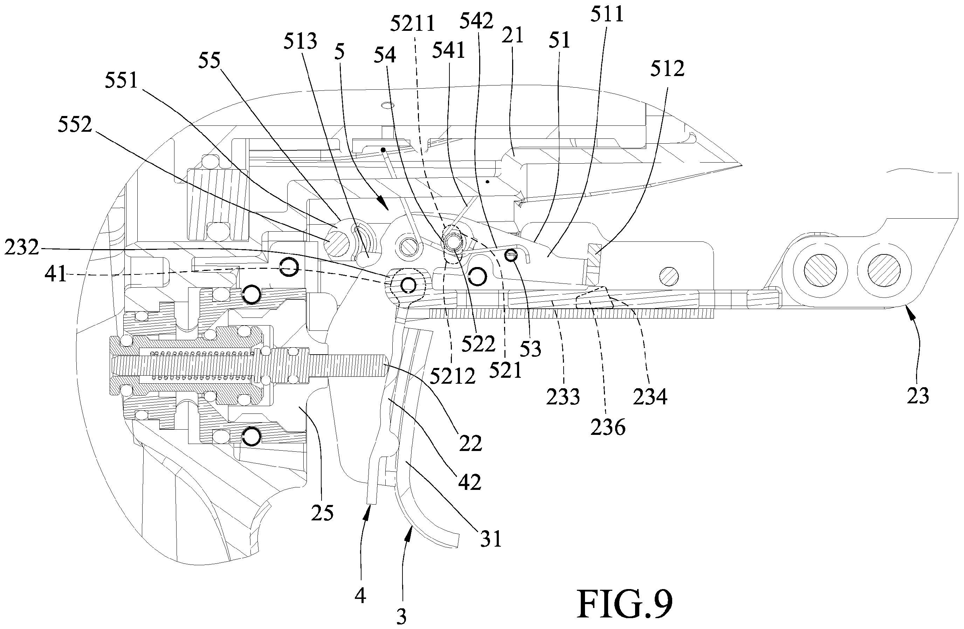

Referring further to Figure 9, after the firing of the nail and with the trigger 31 being continuously depressed, the casing 21 would be forced to move away from the object by a reaction force, and then be pushed against the object again. During the relative movement between the casing 21 and the obj ect away from each other, the lever member 4 is pushed away from the valve seat 25 by the valve rod 22 to move the safety member 23 toward the second position. As a result, the limiting blocks 236 push the stop wall 512 and move past the stop wall 512 against the biasing action of the latch resilient member 54, and the stop wall 512 is biased by the latch resilient member 54 (onto the path of movement of the safety member 23 again) to hinder the movement of the limiting blocks 236 toward the valve seat 25, so the safety member 23 is prevented from moving to the first position for firing another nail unless the trigger 31 is released.

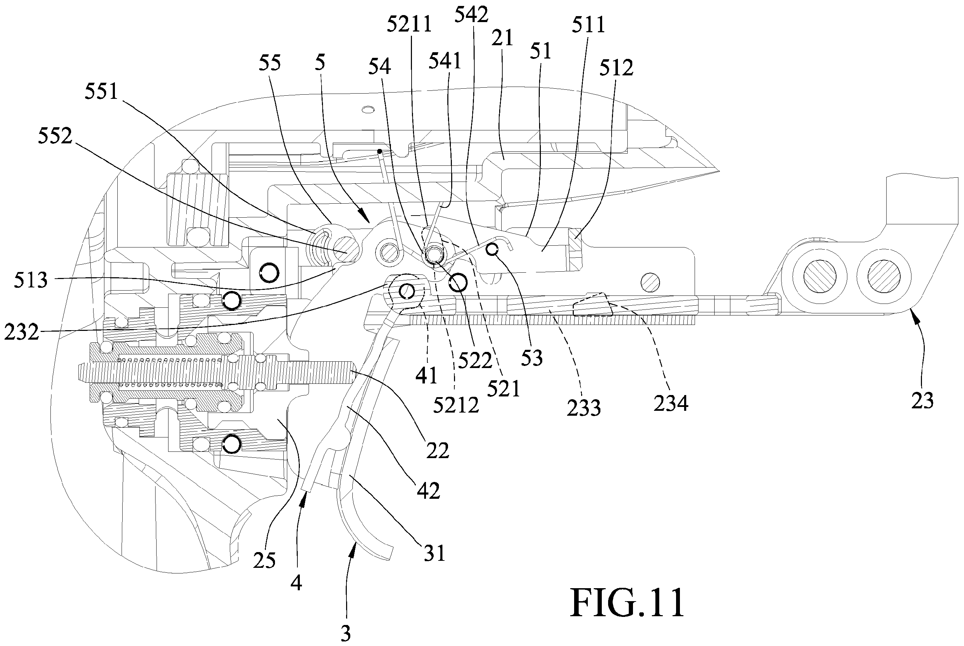

Referring to Figure 11, when the switch member 55 is at the repetitive firing position and when the trigger 31 is depressed without pushing the urging end portion 231 of the safety member 23 against an object, the pivot portion 41 of the lever member 4 is moved away from the valve seat 25 to move the safety member 23 to the second position against the biasing action of the safety resilient member 24, and the resultant movement of the valve rod 22 is insufficient for firing a nail.

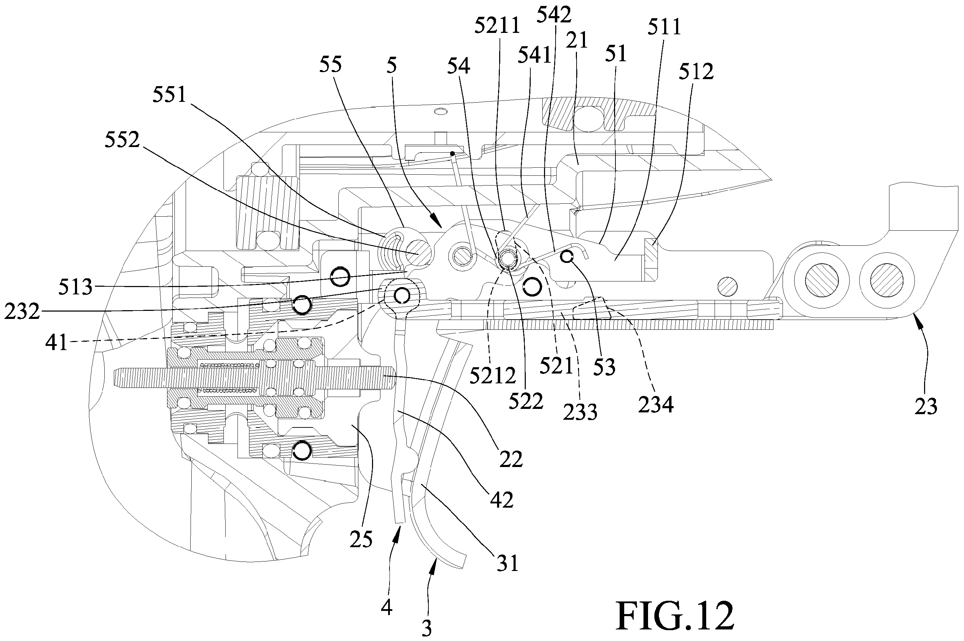

Referring to Figure 12, when the switch member 55 is at the repetitive firing position and when the trigger 31 is depressed after the urging end portion 231 of the safety member 23 is pushed against an object to maintain the safety member 23 at the first position, the actuating portion 42 of the lever member 4 is moved toward the valve seat 25 by the trigger 31, and the pivot portion 41 of the lever member 4 is prevented from moving away from the valve seat 25 by the object, so the valve rod 22 is depressed by the actuating portion 42 of the lever member 4 to move by a distance that is sufficient for firing a nail.

Since the latch member 51 is separated from the path of movement of the safety member 23 by the control portion 552 of the switch member 55, the movement of the safety member 23 is not limited by the latch member 51 when the control portion 552 is at the repetitive firing position. Therefore, the safety member 23 can be repeatedly pushed against an object/objects to move from the second position to the fist position while the trigger 31 is continuously depressed so as to repeatedly fire nails.

By virtue of the trigger assembly of this disclosure, the pneumatic tool 2 can be operated in a sequential firing mode or a repetitive firing mode by adjusting the switch member 55.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A trigger assembly adapted for use in a pneumatic tool (2), the pneumatic tool (2) including a casing (21), a valve rod (22) that is movably mounted to the casing (21) and that is operable to control airflow in the pneumatic tool (2) for firing a nail, and a safety member (23) that is movably mounted to the casing (21), the safety member (23) being movable relative to the casing (21) between a first position where the safety member (23) is proximate to a valve seat (25) to which the valve rod (22) is mounted, and a second position where the safety member (23) is distal from the valve seat (25), said trigger assembly **characterized by**:
a trigger unit (3) including a trigger (31) that is adapted to be pivoted to the casing (21), said trigger (31) being pivotable relative to the casing (21) between a released position and a depressed position;
a lever member (4) adapted to be pivoted to the safety member (23) and partially located between the valve rod (22) and said trigger (31) for depressing the valve rod (22); and
a switch unit (5) including a latch member (51) that is adapted to be pivoted to the casing (21) and that is pivotable relative to said trigger (31), and a switch member (55) that is adapted to be rotatably mounted to the casing (21) and that is rotatable between a sequential firingpositionwhere said switch member (55) is separated from the path of movement of said latch member (51) to permit said latch member (51) to be moved onto the path of movement of the safety member (23) upon depression of said trigger (31), and a repetitive firing position where said switch member (55) is disposed on the path of movement of said latch member (51) so as to prevent said latch member (51) from being moved onto the path of movement of the safety member (23).

2. The trigger assembly as claimed in claim 1, **characterized in that** said switch unit (5) further includes a latch resilient member (54), said latch member (51) having a stop wall (512) that is distal from the valve seat (25), said latch resilient member (54) resiliently biasing said stop wall (512) of said latch member (51) toward the safety member (23).

3. The trigger assembly as claimed in claim 2, further **characterized in that** said latch member (51) further has at least one projection (513) that is opposite to said stop wall (512), said switch member (55) having a main body (551) that is adapted to be rotatably mounted to the casing (21), and a control portion (552) that is eccentric to said main body (551), said control portion (552) being separated from the path of movement of said projection (513) of said latch member (51) when said switch member (55) is at the sequential firing position, said control portion (552) being disposed on the path of movement of said projection (513) of the latch member (51) to prevent said latch member (51) from being moved onto the path of movement of the safety member (23) when said switch member (55) is at the repetitive firing position.

4. The trigger assembly as claimed in claim 3, the safety member (23) having an engaging portion (233), said trigger assembly being further **characterized in that** said stop wall (512) of said latch member (51) is engageable with the engaging portion (233) of the safety member (23).

5. The trigger assembly as claimed in claim 4, further **characterized in that** when said switch member (55) is at the sequential firing position and when said trigger (31) is depressed without pushing the safety member (23) against an object, said lever member (4) is driven by said trigger (31) to move the safety member (23) from the first position to the second position, and said latch member (51) is moved to engage said stop wall (512) with the engaging portion (233) of the safety member (23) so as to prevent movement of the safety member (23) from the second position to the first position.

6. The trigger assembly as claimed in claim 4, further **characterized in that** when said switch member (55) is at the sequential firing position and when said trigger (31) is depressed after the safety member (23) is pushed against an object to be maintained at the first position, said lever member (4) is driven by said trigger (31) to depress the valve rod (22) so as to fire the nail, and said latch member (51) is permitted to move onto the path of movement of the safety member (23), upon the depression of said trigger (31), to engage said stop wall (512) with the engaging portion (233) of the safety member (23), the safety member (23) moving toward the second position after the firing of the nail and being prevented from moving back to the first position by said stop wall (512) of said latch member (51).
